# EUROPEAN PATENT APPLICATION

(11) **EP 4 657 704 A1**
(43) Date of publication of application: **03.12.2025**
(21) Application number: 24178994.0
(22) Date of filing: 30.05.2024
(51) Int. Cl.: H02J 7/00, B60R 16/03

(54) **METHOD AND COMPUTER PROGRAM PRODUCT FOR MANAGING A POWER SUPPLYING SYSTEM ONBOARD A VEHICLE, ONBOARD POWER SUPPLY SYSTEM OF A VEHICLE, AND VEHICLE COMPRISING SUCH POWER SUPPLY SYSTEM**

(71) Applicant: Volvo Truck Corporation, 405 08 Göteborg (SE)
(72) Inventor: LUNDSTEDT, Björn, 443 39 LERUM (SE); HALLÉN, Viktor, 41261 GÖTEBORG (SE)
(74) Representative: Lavoix

(57) **Abstract**

Method (100) for managing a power supplying system of a vehicle which comprises a main power generation device (2) and a battery (3) for backing-up or supporting the main power generation device (2), comprising:
- (110) detecting if the vehicle has been jump-started and, in the affirmative case,
- (120) allowing the vehicle to proceed at a speed below a predefined speed threshold;
- (130) performing at least one active test of the battery thereby verifying its present level of charge;
- (140) comparing the present level of charge with at least one predefined charge threshold;
- if the present level of charge is below the predefined charge threshold, (150) executing at least one of:
- issuing a warning signal for a user of the vehicle;
- limiting/inhibiting at least one operation of the vehicle and/or power supply of one or more power consuming loads (6) onboard the vehicle.

## Description

### TECHNICAL FIELD

The disclosure relates generally to the field of motor vehicles. In particular aspects, the disclosure relates to a method and computer program product for managing a power supplying system suitable to be installed onboard a vehicle, to an onboard power supply system of a vehicle, and to a vehicle comprising such a power supply system.

The disclosure can be applied to heavy-duty vehicles, such as trucks, buses, and construction equipment, among other vehicle types. Although the disclosure may be described with respect to a particular vehicle, such as a truck, the disclosure is not restricted to any particular vehicle.

### BACKGROUND

As known, in most vehicles the required onboard electrical system voltage comes from a main power generating device, such as an alternator driven by the engine of the vehicle or a DC-DC converter from high voltage traction batteries in electrical vehicles. In addition, at least one battery provides voltage for backing up or supporting the main power generating device in supplying the various operations/onboard loads of the vehicle.

For various reasons, the onboard battery supporting the electrical system may be empty or poorly charged, and the vehicle can then be jump-started using an external battery of another vehicle, or by means of other external power sources temporarily connected to the vehicle.

After such jump-start is carried out, the alternator or the DC-DC converter normally increases the voltage and the vehicle may be drivable.

However, if the alternator or the DC-DC converter is not designed to be safe enough for supporting all vehicle's operations, e.g. driving a truck at any speed, the onboard battery may still be poorly charged and may not properly back-up or support the alternator or the DC-DC converter in providing the required supporting system voltage.

This may cause some inconveniences, such as limitations of some operations of the vehicle, disconnection of one or more onboard electrical loads.

Hence, there is need, desire and room for further improvements in the way onboard power systems are managed and utilized, in particular in such circumstances.

### SUMMARY

According to a first aspect of the disclosure, there is provided a method for managing a power supplying system which is suitable to be installed onboard a vehicle and comprises at least a main power generation device and at least one battery suitable for electrically backing-up or supporting the main power generation device, the method comprising:
- detecting if the vehicle has been jump-started and, in the affirmative case,
- allowing the vehicle to proceed at a speed below a predefined speed threshold;
- performing at least one active test of the at least one battery thereby verifying its present level of charge;
- comparing the present level of charge of the at least one battery with at least one predefined charge threshold for the battery;
- if the verified present level of charge of the at least one battery is below the at least one predefined charge threshold, executing at least one of:
   - issuing a warning signal for a user of the vehicle;
   - limiting/inhibiting at least one operation executable by the vehicle and/or power supply of one or more power consuming loads onboard the vehicle. The first aspect of the disclosure may seek to allow a proper restarting of a vehicle once after a jump-start has been executed. A technical benefit may include avoiding that the onboard main source of power is overloaded due to a poorly charged battery and/or its availability is not good enough yet.

Optionally in some examples, including in at least one preferred example, wherein said performing at least one active test of the at least one battery comprises lowering the voltage output level of the main power generation device at least below a nominal voltage output level of the at least one battery. A technical benefit may include better ensuring that is the battery being actually properly tested.

Optionally in some examples, including in at least one preferred example, said performing at least one active test of the at least one battery comprises switching off for a predetermined interval of time the main power generation device. A technical benefit may include testing the battery without the presence of any voltage providing device.

Optionally in some examples, including in at least one preferred example, said performing at least one active test of the at least one battery and said comparing the present level of charge of the at least one battery with at least one predefined charge threshold are repeated periodically until when the verified present level of charge of the at least one battery is at least equal to the at least one predefined charge threshold, and then removing an issued warning signal for a user, and/or the limitation/inhibition of the at least one operation executable by the vehicle, and/or the limitation/inhibition the power supply of one or more power consuming loads onboard the vehicle. A technical benefit may include timely warning a vehicle's user, and/or removing as early as possible any previously introduced operation limitation/warning previously put in place.

Optionally in some examples, including in at least one preferred example, the method further comprises after a jump-started is detected, and before said performing at least one active test of the at least one battery, issuing an alert signal for said user of the vehicle. A technical benefit may include timely informing a vehicle user about the fact that the vehicle was subject to a jump start.

Optionally in some examples, including in at least one preferred example, the method comprises performing a preliminary active test of the at least one battery before said allowing the vehicle to proceed at said speed below a predefined speed threshold. A technical benefit may include ensuring that the battery test is not fouled by the presence of an external power source still connected for charging the battery.

Optionally in some examples, including in at least one preferred example, said detecting comprises checking if one or more data indicative of an occurred jump-start have been recorded in a data storage suitable to be installed onboard of the vehicle. A technical benefit may include properly recording when any jump start has been executed.

Optionally in some examples, including in at least one preferred example, said detecting comprises disregarding a detected jump-start event if the detected jump-start event occurred before a predetermined interval of time counted back from when said detecting is started. A technical benefit may include preventing execution of battery tests for jump starts executed long time before and whose effect may not be relevant anymore.

Optionally in some examples, including in at least one preferred example, the vehicle comprises a plurality of power consuming loads which are grouped into at least a first group of one or more power consuming loads and a second group of one or more power consuming loads, and wherein said comparing comprises comparing the verified present level of charge of the at least one battery with at least a first predefined charge threshold indicative of a level of charge of the at least one battery sufficient for supplying the first group of one or more power consuming loads, and with a second predefined charge threshold higher than the first predefined charge threshold and indicative of a level of charge of the at least one battery sufficient for additionally supplying also the second group of one or more loads. A technical benefit may include selecting powering or not powering loads according to their importance and prioritization.

Optionally in some examples, including in at least one preferred example, said executing comprises:
- if the verified present level of charge of the at least one battery is below the first predefined charge threshold, at least limiting or completely inhibiting power supply for the first and second groups of power consuming loads;
- if the verified present level of charge of the at least one battery is at least equal to the first predefined charge threshold but below the second predefined charge threshold, at least limiting or completely inhibiting power supply for the second groups of power consuming loads while allowing power supply for the first group of power consuming loads;
- if the verified present level of charge of the at least one battery is at least equal to the second predefined charge threshold, allowing power supply for the first and second groups of power consuming loads. A technical benefit may include gradually repowering loads depending on the detected present level of charge of the battery under testing.

According to a second aspect of the disclosure, there is provided a power supply system suitable to be installed onboard a vehicle, comprising at least:
- a main power generation device;
- at least one battery suitable for electrically backing-up or supporting the main power generation device;
- a controller which:
   - (a) detects if the vehicle has been jump-started and, in the affirmative case,
   - (b) allows the vehicle to proceed at a speed below a predefined speed threshold;
   - (c) performs at least one active test of the at least one battery thereby verifying its present level of charge;
   - (d) compares the present level of charge of the at least one battery with at least one predefined charge threshold for the battery; and
- if the verified present level of charge of the at least one battery is below the at least one predefined charge threshold, (e) executes at least one or of:
   - outputting a warning signal for a user of the vehicle;
   - outputting a command for limiting/inhibiting at least one operation executable by the vehicle and/or power supply of one or more power consuming loads onboard the vehicle. The second aspect of the disclosure may seek to allow a proper restarting of a vehicle once after a jump-start has been executed. A technical benefit may include avoiding that the onboard main source of power is overloaded due to a poorly charged battery and/or its availability is not good enough yet.

Optionally in some examples, including in at least one preferred example, when performing said active test of the at least one battery the controller (5) lowers the voltage output level of the main power generation device at least below a nominal voltage output level of the at least one battery.

Optionally in some examples, including in at least one preferred example, when performing said active test of the at least one battery the controller switches off for a predetermined interval of time the main power generation device.

Optionally in some examples, including in at least one preferred example, wherein the controller periodically performs an active test of the at least one battery thereby verifying its present level of charge and compares the present level of charge of the at least one battery with the at least one predefined charge threshold until the verified present level of charge of the at least one battery is at least equal to the at least one predefined charge threshold, and then removes an issued warning signal for a user, and/or the limitation/inhibition of the at least one operation executable by the vehicle, and/or the limitation/inhibition of the power supply of one or more power consuming loads onboard the vehicle.

Optionally in some examples, including in at least one preferred example, the controller issues an alert signal for said user of the vehicle after a jump-started is detected and before performing the at least one active test of the at least one battery.

Optionally in some examples, including in at least one preferred example, after having detected that the vehicle has been jump-started, the controller performs a preliminary active test of the at least one battery.

Optionally in some examples, including in at least one preferred example, the system further comprises a data storage and wherein, when detecting if the vehicle has been jump-started, the controller checks if one or more data indicative of an occurred jump-start have been recorded in said data storage.

Optionally in some examples, including in at least one preferred example, the controller disregards a detected jump-start event if the detected jump-start event occurred before a predetermined interval of time counted back from when detecting is started.

Optionally in some examples, including in at least one preferred example, the vehicle comprises a plurality of power consuming loads which are grouped into at least a first group of one or more power consuming loads and a second group of one or more power consuming loads, and wherein the controller compares the verified present level of charge of the at least one battery with at least a first predefined charge threshold indicative of a level of charge of the at least one battery sufficient for supplying the first group of one or more power consuming loads, and with a second predefined charge threshold higher than the first predefined charge threshold and indicative of a level of charge of the at least one battery sufficient for additionally supplying also the second group of one or more loads.

Optionally in some examples, including in at least one preferred example, wherein:
- if the verified present level of charge of the at least one battery is below the first predefined charge threshold, the controller at least limits or completely inhibits power supply for the first and second groups of power consuming loads;
- if the verified present level of charge of the at least one battery is at least equal to the first predefined charge threshold but below the second predefined charge threshold, the controller at least limits or completely inhibits power supply for the second groups of power consuming loads while allowing power supply for the first group of power consuming loads;
- if the verified present level of charge of the at least one battery is at least equal to the second predefined charge threshold, the controller allows power supply for both the first and second groups of power consuming loads.

According to a third aspect of the disclosure, there is provided a vehicle which comprises a power supply system as above indicated, and in particular as described in one or more of the following examples, more in particular as defined in one of more of the relevant appended claims.

According to a fourth aspect of the disclosure, there is provided a computer program product according to claim 15.

The technical benefits above indicated for the various aspects of the method may apply also to the corresponding aspects of the above indicated system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary flow chart of a method for managing a power supplying system which is suitable to be installed onboard a vehicle according to an example;
**FIG. 2** is a schematic diagram of an exemplary power supply system suitable to be installed onboard a vehicle according to an example.

### DETAILED DESCRIPTION

The detailed description set forth below provides information and examples of the disclosed technology with sufficient detail to enable those skilled in the art to practice the disclosure.

A vehicle during its operational life may need to be jump-started. In such circumstances, the onboard battery may not be charged sufficiently to immediately and properly back-up or support in all needed operations/loads the onboard main power generating device, e.g. the alternator driven by the engine or a DC-DC converter associated with high voltage traction batteries in electrical vehicles. Thus, the main power generation device may become overloaded and/or some operations and/or onboard power consuming loads may not be properly supplied and might be inhibited or temporarily limited.

As it will become more apparent from the following description, the present disclosure provides a method, a computer program product, and a system for properly detecting when a vehicle has been jump started, and in such a case implementing a suitable restart of the vehicle's operations/loads. Accordingly, the possibility that the onboard main power generation is overloaded, and/or operations, and/or loads onboard of the vehicle, are enabled when not suitable or disabled/limited for a time longer than strictly necessary may be mitigated.

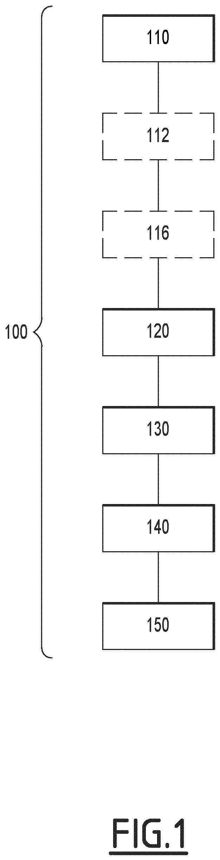

FIG. 1 is an exemplary flow chart schematically illustrating a method 100 for managing a power supplying system which is suitable to be installed onboard a vehicle.

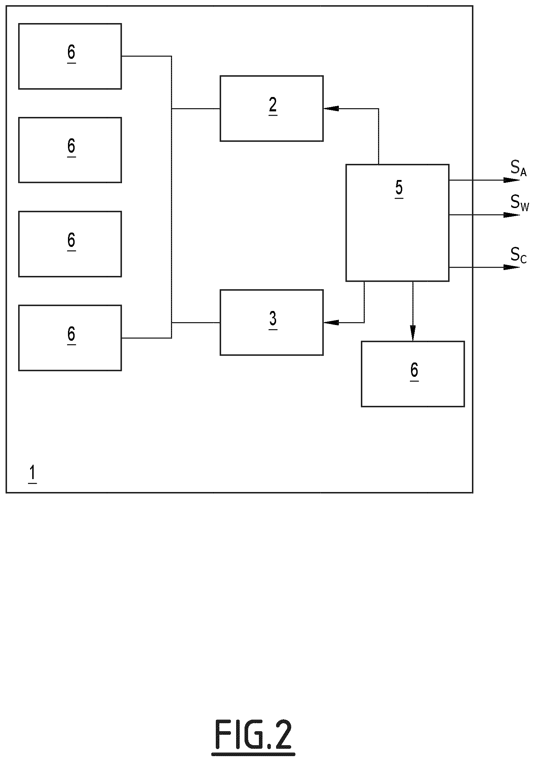

FIG. 2 is a schematic diagram schematically illustrating an example of a power supply system 1 suitable to be installed onboard a vehicle, which comprises at least a main power generation device 2, at least one battery 3 suitable for electrically backing-up or supporting the main power generation device 2, and an electronic controller 5 (in the following also referred to as the "controller 5").

The onboard power supply system 1 is designed to possibly provide power for all needed operations of the vehicle and to all of its power consuming loads, schematically indicated in FIG. 2 by the reference number 6.

In some possible aspects of the system 1, the plurality of onboard power consuming loads 6 may be conveniently grouped into at least a first group of one or more power consuming loads and a second group of one or more power consuming loads.

The assignment of a power consuming load to the first group or the second one may be executed for example based on the importance of each load, i.e. a level of priority that may be preassigned and according to which each load has to be powered vis-à-vis other loads.

In the example illustrated in FIG. 2, the system 1 also comprises a data storage 7 which is suitable to be installed onboard the vehicle.

The data storage 7 can be part of or associated with the controller 5 and may store any type of suitable data which are accessible to the controller 5 itself.

The data storage 7 can be for example a non-volatile Random Access Memory (NVRAM).

The controller 5 can be constituted by or comprised in the electronic control unit (ECU) of the vehicle itself, or can be a separate electronic controller specifically devised for the functionalities of the system 1, and for instance also for carrying out the method 100, according to the present disclosure.

The controller 5 is adapted for example to execute instructions from a computer-readable medium to perform any of the functions or processing described herein. While the controller 5 is represented in FIG. 2 by a single box, it may include any collection of devices that individually or jointly execute a set (or multiple sets) of instructions to perform any of the functions or processing discussed herein. Accordingly, any reference in the disclosure and/or claims to a controller or equivalently to an electronic controller or electronic control unit (ECU), etc., includes reference to one or more such devices to individually or jointly execute a set (or multiple sets) of instructions to perform such functions or processing.

In particular, the controller 5 may comprise at least one computing device or electronic device capable of including firmware, hardware, and/or executing software instructions to implement the functionality/processing described herein. The controller 5 may include processing circuitry (e.g., processing circuitry including one or more processor devices or control units), a memory, such as the data storage. The processing circuitry may include any number of hardware components for conducting data or signal processing or for executing computer code stored in a memory. The processing circuitry may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry may further include computer executable code that controls operation of the programmable device.

As illustrated in figure 1, the method 100 comprises, in whichever suitable order, the following steps, executed for example by or under the control of the controller 15:
- 110: detecting if the vehicle has been jump-started and, in the affirmative case, i.e. when a jump start has been effectively detected,
- 120: allowing the vehicle to proceed at a speed below a predefined speed threshold;
- 130: performing at least one active test of the at least one battery 3 thereby verifying its present level of charge;
- 140: comparing the present level of charge of the at least one battery 3 with at least one predefined charge threshold for the battery;
- if the verified present level of charge of the at least one battery 3 is below the at least one predefined charge threshold, executing (at step 150) at least one of:
- issuing a warning signal Sw for a user of the vehicle;
- limiting/inhibiting at least one operation executable by the vehicle and/or power supply of one or more power consuming loads 6 onboard the vehicle.

The warning signal Sw can be any type of suitable signal or message for a user of the vehicle, e.g. the driver, and can be for example a warning light activated on the dashboard of the vehicle, a message visualized on an onboard display, etc.; the limitation/inhibition of any operation and/or of any power supply for the load(s) can be implemented for instance directly by the onboard controller 5 issuing a command Sc.

In some possible aspects, the step of performing 130 at least one active test of the at least one battery 3 comprises lowering the voltage output level of the main power generation device 2 at least below a nominal voltage output level of the at least one battery 3.

In some possible aspects, the step 130 of performing at least one active test of the at least one battery 3 comprises switching off for a predetermined interval of time the main power generation device 2.

In some possible aspects, the step 130 of performing at least one active test of the at least one battery 3 and the step 140 of comparing the present level of charge of the at least one battery 3 with at least one predefined charge threshold are repeated periodically until when the verified present level of charge of the at least one battery 3 is at least equal to the at least one predefined charge threshold, and then removing (at a step 160) an issued warning signal Sw for a user, and/or the limitation/inhibition of the at least one operation executable by the vehicle, and/or the limitation/inhibition the power supply of one or more power consuming loads 6 onboard the vehicle.

In some possible aspects, the method 100 further comprises, after a jump-started is detected and before the step 130 of performing at least one active test of the at least one battery 3, issuing 112 an alert signal S_{A} for a user of the vehicle.

The alert signal S_{A} can be any type of suitable signal or message for a user of the vehicle, e.g. the driver, and can be for example a warning light activated on the dashboard of the vehicle, a message on a display, etc.

In some possible aspects, the method 100 further comprises, after having detected that a jump start has been executed and for example before executing the step 120 of allowing the vehicle to proceed at said speed below a predefined speed threshold, a step 116 of performing a preliminary active test of the at least one battery 3.

In some possible aspects, the step 110 of detecting comprises checking if one or more data indicative of an occurred jump-start have been recorded in a data storage suitable to be installed onboard of the vehicle, such as the data storage 7.

In some possible aspects, the step 110 of detecting comprises disregarding a detected jump-start event if the detected jump-start event occurred before a predetermined interval of time counted back from when the step 110 of detecting itself is started.

In some possible aspects, the step 140 of comparing comprises comparing the verified present level of charge of the at least one battery 3 with at least a first predefined charge threshold indicative of a level of charge of the at least one battery 3 sufficient for supplying the first group of one or more power consuming loads, and with a second predefined charge threshold higher than the first predefined charge threshold indicative of a level of charge of the at least one battery 3 sufficient for additionally supplying also the second group of one or more loads.

In particular, in some possible aspects, the step 150 of executing comprises:
- if the verified present level of charge of the at least one battery 3 is below the first predefined charge threshold, at least limiting or completely inhibiting power supply for the first and second groups of power consuming loads;
- if the verified present level of charge of the at least one battery 3 is at least equal to the first predefined charge threshold but below the second predefined charge threshold, at least limiting or completely inhibiting power supply for the second groups of power consuming loads while allowing power supply for the first group of power consuming loads;
- if the verified present level of charge of the at least one battery 3 is at least equal to the second predefined charge threshold, allowing power supply for the first and second groups of power consuming loads.

As above indicated, FIG. 2 illustrates a power supply system 1 suitable to be installed onboard a vehicle, and which comprises at least one battery 3, the controller 5, which can be used for executing one or more the steps previously described for the method 100, and the main power generation device 2, such as an alternator or, in case the vehicle is an electrical vehicle, a DC-DC converter which is associated to and converts high voltage power provided by one or more onboard traction batteries.

In some possible aspects, the controller 5 is configured to:
- detect if the vehicle has been jump-started and, in the affirmative case,
- allow the vehicle proceeding at a speed below a predefined speed threshold;
- perform at least one active test of the at least one battery 3 thereby verifying its present level of charge;
- compares the present level of charge of the at least one battery 3 with at least one predefined charge threshold for the battery; and
- if the verified present level of charge of the at least one battery 3 is below the at least one predefined charge threshold, execute at least one or of:
- outputting a warning signal Sw for a user of the vehicle;
- outputting a command for limiting/inhibiting at least one operation executable by the vehicle and/or power supply of one or more power consuming loads 6 onboard the vehicle.

As above indicated, the warning signal Sw can be any type of suitable signal or message for a user of the vehicle, e.g. the driver, and can be for example a warning light activated on the dashboard of the vehicle, a message on a display, etc.; the limitation/inhibition of any operation and/or of any power supply for the load(s) can be implemented for instance directly by the onboard controller 5 issuing a command Sc.

In some possible aspects, when performing said active test of the at least one battery 3 the controller 5 is configured to lower the voltage output level of the main power generation device 2 at least below a nominal voltage output level of the at least one battery 3.

In some possible aspects, when performing said active test of the at least one battery 3, the controller 5 is configured to switch off for a predetermined interval of time the main power generation device 2.

In some possible aspects, the controller 5 is configured to periodically perform an active test of the at least one battery 3 thereby verifying its present level of charge and compares the present level of charge of the at least one battery 3 with the at least one predefined charge threshold until the verified present level of charge of the at least one battery 3 is at least equal to the at least one predefined charge threshold, and then to remove an issued warning signal Sw for a user, and/or the limitation/inhibition of the at least one operation executable by the vehicle, and/or the limitation/inhibition of the power supply of one or more power consuming loads 6 onboard the vehicle.

In some possible aspects, the controller 5 is further configured to issue an alert signal S_{A} for a user of the vehicle after a jump-started is detected and before performing the at least one active test of the at least one battery 3.

As above indicated, the alert signal S_{A} can be any type of suitable signal or message for a user of the vehicle, e.g. the driver, and can be for example a warning light activated on the dashboard of the vehicle, a message on a display, etc.

In some possible aspects, after having detected that the vehicle has been jump-started, and for instance before allowing the vehicle to proceed at a speed below a predefined speed threshold, the controller 5 is further configured to perform a preliminary active test of the at least one battery 3.

In some possible aspects, when detecting if the vehicle has been jump-started, the controller 5 is configured to check if one or more data indicative of an occurred jump-start have been recorded in a data storage unit, such as the data storage 7.

In particular, in some possible aspects, the controller 5 is configured to disregard a detected jump-start event if the detected jump-start event occurred before a predetermined interval of time counted back from when detecting is started.

According to some possible aspects, the controller 5 is configured to compare the verified present level of charge of the at least one battery 3 with at least a first predefined charge threshold indicative of a level of charge of the at least one battery 3 sufficient for supplying the first group of one or more power consuming loads, and with a second predefined charge threshold higher than the first predefined charge threshold and indicative of a level of charge of the at least one battery 3 sufficient for additionally supplying also the second group of one or more loads.

In particular, according to some aspects, the controller 5 is configured to:
- if the verified present level of charge of the at least one battery 3 is below the first predefined charge threshold, at least limit or completely inhibit power supply for the first and second groups of power consuming loads;
- if the verified present level of charge of the at least one battery 3 is at least equal to the first predefined charge threshold but below the second predefined charge threshold, at least limit or completely inhibit power supply for the second groups of power consuming loads while allowing power supply for the first group of power consuming loads;
- if the verified present level of charge of the at least one battery 3 is at least equal to the second predefined charge threshold, allow power supply for both the first and second groups of power consuming loads.

The system 1 according to the present disclosure can be installed/implemented in any suitable vehicle, and in particular in trucks.

The present disclosure provides the following examples.

Example 1: a method 100 for managing a power supplying system which is suitable to be installed onboard a vehicle and comprises at least a main power generation device 2 and at least one battery 3 suitable for electrically backing-up or supporting the main power generation device, the method 100 comprising:
- 110: detecting if the vehicle has been jump-started and, in the affirmative case,
- 120: allowing the vehicle to proceed at a speed below a predefined speed threshold;
- 130: performing at least one active test of the at least one battery 3 thereby verifying its present level of charge;
- 140: comparing the present level of charge of the at least one battery 3 with at least one predefined charge threshold for the battery 3;
- if the verified present level of charge of the at least one battery is below the at least one predefined charge threshold, executing (step 150) at least one of:
- issuing a warning signal Sw for a user of the vehicle;
- limiting/inhibiting at least one operation executable by the vehicle and/or power supply of one or more power consuming loads 6 onboard the vehicle.

Example 2: the method according to example 1 wherein said step 130 of performing at least one active test of the at least one battery 3 comprises lowering the voltage output level of the main power generation device 2 at least below a nominal voltage output level of the at least one battery 3.

Example 3: the method according to any of examples 1 and 2, wherein said step 130 of performing at least one active test of the at least one battery 3 comprises switching off for a predetermined interval of time the main power generation device 2.

Example 4: the method according to any of the previous examples, wherein said step 130 of performing at least one active test of the at least one battery 3 and said step 140 of comparing the present level of charge of the at least one battery 3 with at least one predefined charge threshold are repeated periodically until when the verified present level of charge of the at least one battery 3 is at least equal to the at least one predefined charge threshold, and then removing (at step 160) an issued warning signal Sw for a user, and/or the limitation/inhibition of the at least one operation executable by the vehicle, and/or the limitation/inhibition the power supply of one or more power consuming loads 6 onboard the vehicle.

Example 5: the method according to any of the previous examples, wherein it further comprises after a jump-started is detected, and before said step of performing 130 at least one active test of the at least one battery 3, issuing (at step 112) an alert signal S_{A} for said user of the vehicle.

Example 6: the method according to any of the previous examples, wherein it comprises performing (step 116) a preliminary active test of the at least one battery 3 before said step 120 of allowing the vehicle to proceed at said speed below a predefined speed threshold.

Example 7: the method according to any of the previous examples, wherein said step 110 of detecting comprises checking if one or more data indicative of an occurred jump-start have been recorded in a data storage 7 suitable to be installed onboard of the vehicle.

Example 8: the method according to any of the previous examples, wherein said step 110 of detecting comprises disregarding a detected jump-start event if the detected jump-start event occurred before a predetermined interval of time counted back from when said step 110 of detecting is started.

Example 9: the method according to any of the previous examples, wherein the vehicle comprises a plurality of power consuming loads 6 which are grouped into at least a first group of one or more power consuming loads and a second group of one or more power consuming loads, and wherein said step 140 of comparing comprises comparing the verified present level of charge of the at least one battery 3 with at least a first predefined charge threshold indicative of a level of charge of the at least one battery 3 sufficient for supplying the first group of one or more power consuming loads, and with a second predefined charge threshold higher than the first predefined charge threshold and indicative of a level of charge of the at least one battery 3 sufficient for additionally supplying also the second group of one or more loads.

Example 10: the method according to the example 9, wherein said step 150 of executing comprises:
- if the verified present level of charge of the at least one battery 3 is below the first predefined charge threshold, at least limiting or completely inhibiting power supply for the first and second groups of power consuming loads;
- if the verified present level of charge of the at least one battery 3 is at least equal to the first predefined charge threshold but below the second predefined charge threshold, at least limiting or completely inhibiting power supply for the second groups of power consuming loads while allowing power supply for the first group of power consuming loads;
- if the verified present level of charge of the at least one battery 3 is at least equal to the second predefined charge threshold, allowing power supply for the first and second groups of power consuming loads.

Example 11: a power supply system 1 suitable to be installed onboard a vehicle, comprising at least:
- a main power generation device 2;
- at least one battery 3 suitable for electrically backing-up or supporting the main power generation device 2;
- a controller 5 which:
   - (a) detects if the vehicle has been jump-started and, in the affirmative case,
   - (b) allows the vehicle to proceed at a speed below a predefined speed threshold;
   - (c) performs at least one active test of the at least one battery 3 thereby verifying its present level of charge;
   - (d) compares the present level of charge of the at least one battery 3 with at least one predefined charge threshold for the battery; and
- if the verified present level of charge of the at least one battery 3 is below the at least one predefined charge threshold, (e) executes at least one or of:
   - outputting a warning signal Sw for a user of the vehicle;
   - outputting a command Sc for limiting/inhibiting at least one operation executable by the vehicle and/or power supply of one or more power consuming loads 6 onboard the vehicle.

Example 12: the system of example 11, wherein, when performing said active test of the at least one battery 3 the controller 5 lowers the voltage output level of the main power generation device 2 at least below a nominal voltage output level of the at least one battery 3.

Example 13: the system of any of examples 11 and 12, wherein, when performing said active test of the at least one battery 3 the controller 5 switches off for a predetermined interval of time the main power generation device 2.

Example 14: the system of any of examples 11 to 13, wherein the controller 5 periodically performs an active test of the at least one battery 3 thereby verifying its present level of charge and compares the present level of charge of the at least one battery 3 with the at least one predefined charge threshold until the verified present level of charge of the at least one battery 3 is at least equal to the at least one predefined charge threshold, and then removes an issued warning signal Sw for a user, and/or the limitation/inhibition of the at least one operation executable by the vehicle, and/or the limitation/inhibition of the power supply of one or more power consuming loads 6 onboard the vehicle.

Example 15: the system of any of examples 11 to 14, wherein the controller 5 issues an alert signal S_{A} for said user of the vehicle after a jump-started is detected and before performing the at least one active test of the at least one battery 3.

Example 16: the system of any of examples 11 to 15, wherein, after having detected that the vehicle has been jump-started, the controller 5 performs a preliminary active test of the at least one battery 3.

Example 17: the system of any of examples 11 to 16, further comprising a data storage 7 and wherein, when detecting if the vehicle has been jump-started, the controller 5 checks if one or more data indicative of an occurred jump-start have been recorded in said data storage 7.

Example 18: the system of any of examples 11 to 17, wherein the controller 5 disregards a detected jump-start event if the detected jump-start event occurred before a predetermined interval of time counted back from when detecting is started.

Example 19: the system of any of examples 11 to 18, wherein the vehicle comprises a plurality of power consuming loads 6 which are grouped into at least a first group of one or more power consuming loads and a second group of one or more power consuming loads, and wherein the controller compares the verified present level of charge of the at least one battery 3 with at least a first predefined charge threshold indicative of a level of charge of the at least one battery 3 sufficient for supplying the first group of one or more power consuming loads, and with a second predefined charge threshold higher than the first predefined charge threshold and indicative of a level of charge of the at least one battery 3 sufficient for additionally supplying also the second group of one or more loads.

Example 20: the system of example 19, wherein:
- if the verified present level of charge of the at least one battery 3 is below the first predefined charge threshold, the controller at least limits or completely inhibits power supply for the first and second groups of power consuming loads;
- if the verified present level of charge of the at least one battery 3 is at least equal to the first predefined charge threshold but below the second predefined charge threshold, the controller at least limits or completely inhibits power supply for the second groups of power consuming loads while allowing power supply for the first group of power consuming loads;
- if the verified present level of charge of the at least one battery 3 is at least equal to the second predefined charge threshold, the controller allows power supply for both the first and second groups of power consuming loads.

Example 21: a vehicle comprising a power supply system 1 of any of examples 11 to 20.

Example 22: a computer program product comprising program code for performing, when executed by a processing circuitry, the method of any of examples 1-10.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Further, when the term "adapted" or "arranged" or "configured" or "shaped", is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to.

In particular, for electronic and/or software entities, each of the above listed terms means and encompasses electronic circuits or parts thereof, as well as stored, embedded or running software codes and/or routines, algorithms, or complete programs, suitably designed for achieving the technical result and/or the functional performances for which such entities are devised.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method (100) for managing a power supplying system which is suitable to be installed onboard a vehicle and comprises at least a main power generation device (2) and at least one battery (3) suitable for electrically backing-up or supporting the main power generation device (2), the method (100) comprising:
- (110) detecting if the vehicle has been jump-started and, in the affirmative case,
- (120) allowing the vehicle to proceed at a speed below a predefined speed threshold;
- (130) performing at least one active test of the at least one battery (3) thereby verifying its present level of charge;
- (140) comparing the present level of charge of the at least one battery (3) with at least one predefined charge threshold for the battery;
- if the verified present level of charge of the at least one battery (3) is below the at least one predefined charge threshold, (150) executing at least one of:
- issuing a warning signal (Sw) for a user of the vehicle;
- limiting/inhibiting at least one operation executable by the vehicle and/or power supply of one or more power consuming loads (6) onboard the vehicle.

2. The method (100) of claim 1, wherein said (130) performing at least one active test of the at least one battery (3) comprises lowering the voltage output level of the main power generation device (2) at least below a nominal voltage output level of the at least one battery (3).

3. The method (100) of any of claims 1 and 2, wherein said (130) performing at least one active test of the at least one battery (3) comprises switching off for a predetermined interval of time the main power generation device (2).

4. The method (100) of any of the previous claims, wherein said (130) performing at least one active test of the at least one battery (3) and said (140) comparing the present level of charge of the at least one battery (3) with at least one predefined charge threshold are repeated periodically until when the verified present level of charge of the at least one battery (3) is at least equal to the at least one predefined charge threshold, and then (160) removing an issued warning signal (Sw) for a user, and/or the limitation/inhibition of the at least one operation executable by the vehicle, and/or the limitation/inhibition the power supply of one or more power consuming loads (6) onboard the vehicle.

5. The method (100) of any of the previous claims, wherein it further comprises after a jump-started is detected, and before said performing (130) at least one active test of the at least one battery (3), issuing (112) an alert signal (S_{A}) for said user of the vehicle.

6. The method (100) of any of the previous claims, wherein said (110) detecting comprises checking if one or more data indicative of an occurred jump-start have been recorded in a data storage (7) suitable to be installed onboard of the vehicle.

7. The method (100) of any of the previous claims, wherein said detecting (110) comprises disregarding a detected jump-start event if the detected jump-start event occurred before a predetermined interval of time counted back from when said (110) detecting is started.

8. The method (100) of any of the previous claims, wherein the vehicle comprises a plurality of power consuming loads (6) which are grouped into at least a first group of one or more power consuming loads and a second group of one or more power consuming loads, and wherein said comparing (140) comprises comparing the verified present level of charge of the at least one battery (3) with at least a first predefined charge threshold indicative of a level of charge of the at least one battery (3) sufficient for supplying the first group of one or more power consuming loads, and with a second predefined charge threshold higher than the first predefined charge threshold and indicative of a level of charge of the at least one battery (3) sufficient for additionally supplying also the second group of one or more loads.

9. The method (100) of claim 8, wherein said (150) executing comprises:
- if the verified present level of charge of the at least one battery (3) is below the first predefined charge threshold, at least limiting or completely inhibiting power supply for the first and second groups of power consuming loads;
- if the verified present level of charge of the at least one battery (3) is at least equal to the first predefined charge threshold but below the second predefined charge threshold, at least limiting or completely inhibiting power supply for the second groups of power consuming loads while allowing power supply for the first group of power consuming loads;
- if the verified present level of charge of the at least one battery (3) is at least equal to the second predefined charge threshold, allowing power supply for the first and second groups of power consuming loads.

10. A power supply system (1) suitable to be installed onboard a vehicle, comprising at least:
- a main power generation device (2);
- at least one battery (3) suitable for electrically backing-up or supporting the main power generation device (2);
- a controller (5) which:
- (a) detects if the vehicle has been jump-started and, in the affirmative case,
- (b) allows the vehicle to proceed at a speed below a predefined speed threshold;
- (c) performs at least one active test of the at least one battery (3) thereby verifying its present level of charge;
- (d) compares the present level of charge of the at least one battery (3) with at least one predefined charge threshold for the battery; and
- if the verified present level of charge of the at least one battery (3) is below the at least one predefined charge threshold, (e) executes at least one or of:
- outputting a warning signal (Sw) for a user of the vehicle;
- outputting a command (Sc) for limiting/inhibiting at least one operation executable by the vehicle and/or power supply of one or more power consuming loads (6) onboard the vehicle.

11. The system (1) of claim 10, wherein, when performing said active test of the at least one battery (3) the controller (5) switches off for a predetermined interval of time the main power generation device (2).

12. The system (1) of any of claims 10 and 11, wherein the vehicle comprises a plurality of power consuming loads (6) which are grouped into at least a first group of one or more power consuming loads and a second group of one or more power consuming loads, and wherein the controller compares the verified present level of charge of the at least one battery (3) with at least a first predefined charge threshold indicative of a level of charge of the at least one battery (3) sufficient for supplying the first group of one or more power consuming loads, and with a second predefined charge threshold higher than the first predefined charge threshold and indicative of a level of charge of the at least one battery (3) sufficient for additionally supplying also the second group of one or more loads.

13. The system (1) of claim 12, wherein:
- if the verified present level of charge of the at least one battery (3) is below the first predefined charge threshold, the controller at least limits or completely inhibits power supply for the first and second groups of power consuming loads;
- if the verified present level of charge of the at least one battery (3) is at least equal to the first predefined charge threshold but below the second predefined charge threshold, the controller at least limits or completely inhibits power supply for the second groups of power consuming loads while allowing power supply for the first group of power consuming loads;
- if the verified present level of charge of the at least one battery (3) is at least equal to the second predefined charge threshold, the controller allows power supply for both the first and second groups of power consuming loads.

14. A vehicle comprising a power supply system (1) of any of claims 10 to 13.

15. A computer program product comprising program code for performing, when executed by a processing circuitry, the method of any of claims 1-9.
